# EUROPEAN PATENT SPECIFICATION

(11) **EP 0 368 673 B1**
(45) Date of publication and mention of the grant of the patent: **30.03.1994**
(21) Application number: 89311656.6
(22) Date of filing: 10.11.1989
(51) Int. Cl.: H04Q 7/04, H04B 7/26, H04M 1/72

(54) **Communications system**
Kommunikationssystem
Système de communication

(30) Priority: 11.11.1988 GB 8826476
(43) Date of publication of application: 16.05.1990
(73) Proprietor: BRITISH TELECOMMUNICATIONS public limited company, London EC1A 7AJ (GB)
(72) Inventor: Motley, Andrew James, Woodbridge Suffolk IP12 4SF (GB); Chadney, Anthony Gerard, Ipswich Suffolk IP4 2ET (GB)
(74) Representative: Buttrick, Richard

(56) References cited:
- EP-A- 0 156 336
- EP-A- 0 233 963
- DE-A- 3 135 231
- GB-A- 2 138 652
- PROCEEDINGS OF THE IEEE, vol. 75, no. 4, April 1987, pages 436-477, IEEE, New York, US; D.C. Cox: "Universal digital portable radio communications"
- PATENT ABSTRACTS OF JAPAN, vol. 5, no. 15 (E-43)[687], 29th January 1981, page 87 E 43 & JP-A-55 143 854

## Description

The present invention relates to a communications system, and in particular to a system for interconnecting mobile radio (RF) units to a fixed network or system e.g. PSN, ISDN, LAN or PBX. A known type of system has a base centre, having one or more radio transceivers for providing a number of radio frequency (RF) communications links; and a plurality of fixed radio ports through which RF signals can be transmitted and received over the air.

At present, for example, in a cellular radio system mobile radio (RF) units communicate with fixed base stations which have radio transceivers that are connected to a switching control centre or base centre which is in turn coupled to the PSTN. In the proposed Telepoint system, cordless telephones (CTs) will be able to access the PSTN via radio communication with fixed base stations equipped with radio transceivers which are directly connected to the PSTN.

In both these examples radio transceivers and base stations proliferate in the connection between the mobile user and the PSTN, or other network. These systems are therefore complicated and expensive.

An example of such a system is disclosed in UK Patent Application No. GB2138652 which discloses a number of cordless substations each of which has a radio transceiver and each of which substations communicates with the other substations and a nodal station connected to the PSTN by optical fibre links or other means. In this system each substation incorporates radio transceivers.

Future systems will want to provide improved coverage including the provision of many small radio "cells", and hence many base stations and radio transceivers will be required. Difficulties in finding appropriate base station sites and the costs of equipping them may make such conventional developments impracticable; certainly they reduce the commercial attractiveness of such projects. The present invention seeks to provide a communication system of simplified structure and improved performance.

According to a first aspect the invention provides a communications system comprising: a base centre, having one or more radio transceivers for providing a number of radio frequency (RF) communications links; and a plurality of fixed radio ports through which RF signals can be transmitted and received over the air; characterised in that there is a fibre optic network for interconnecting the RF transceivers and the fixed radio ports; and there are a plurality of radio/optical interfaces by which RF signals can be modulated onto and demodulated from one or more optical signals, which interfaces are between the RF transceivers and the fibre optic network, and between the fibre optic network and the fixed radio ports, whereby the RF signals may be carried on the fibre optic network by means of modulated optical signals.

The present invention also provides a communications system as described above, further comprising a matrix switch for selectively interconnecting the transceivers and the radio ports through the fibre optic network.

The present invention allows for centralisation of transceivers into base centres, and the consequent advantages in terms of technical and commercial gain, by having the transceivers selectively connectable through the fibre optic network to the RF ports.

The RF Communication linking may for example, be time division multiplexed (TDM) or frequency division multiplexed (FDM).

A preferred embodiment of the invention will now be described by way of example and with reference to the accompanying drawings, wherein:
- Figure 1 is a schematic block diagram of a communications system according to a preferred embodiment of the invention;
- Figure 2a is a schematic block diagram of an optical matrix switch which can form part of the preferred embodiment;
- Figure 2b is a schematic block diagram of an RF matrix switch which can form part of the preferred embodiment; and
- Figure 3 is a schematic view of another embodiment of the invention.

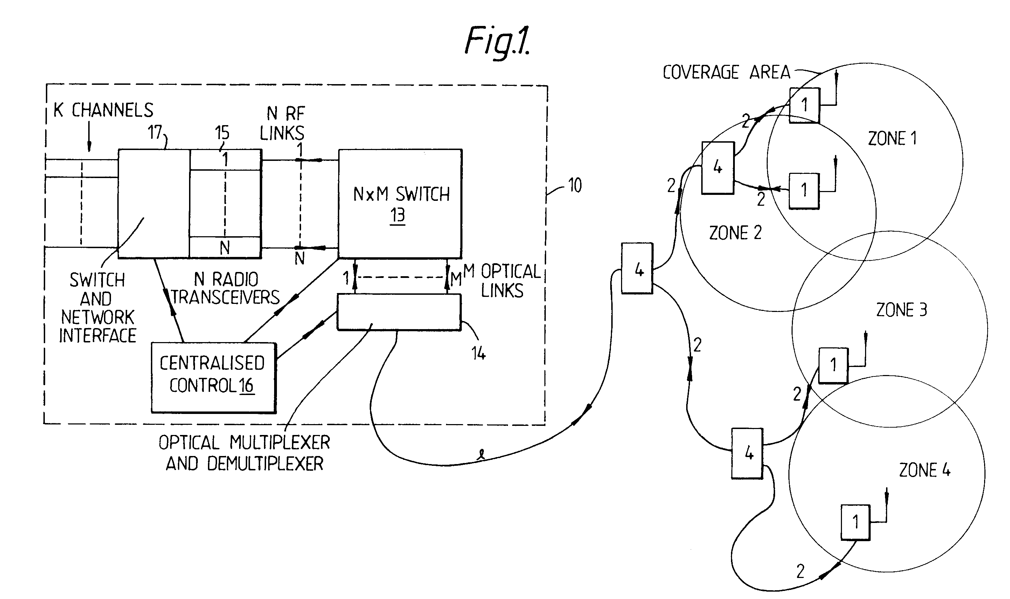

The preferred embodiment illustrated in Figure 1 is a multi-user, area coverage radio distribution system using an optical network 2,4 to link the fixed radio distribution ports 1 to a centralised radio and other signal processing base centre 10. An important feature of the system is the use of an optical carrier modulated, e.g. amplitude modulated, with a radio frequency (RF) signal.

In both the base centre 10 and RF ports 1 there are, arranged in different ways, radio/optical interfaces which can place an RF signal onto an optical carrier or conversely recover an RF signal from an optical carrier. The modulation of the optical carrier may be achieved by driving a suitable laser device with the input RF signal so that output of the laser is effectively intensity or amplitude modulated by the RF signal. With this method, a suitable optical detector receiving the amplitude modulated optical signal can produce a direct RF output. In the present specification, the term radio/optical interface is used in this context.

The radio ports 1 each have a radio/optical interface which receives and transmits radio carriers from and to roaming radio equipment. The radio carriers to be sent/received from the centralised location are placed onto/taken off an optical carrier, e.g. as described above. The optical network 2,4 linking the radio ports 1 to the base centre 10 is generally conventional, having optical links carrying RF carrier/carriers on optical carrier/carriers. Each optical link is shown as bidirectional. However, separate links could be provided for each direction. Within the optical system are optical multiplexers/demultiplexers (M+D) 4. Each multiplexer concentrates a number of optical carriers, say X, onto a fewer number of optical links than X. The demultiplexer splits a number of optical carriers onto individual optical links.

At the base centre 10 the optical system 2,4 is connected to an optical multiplexer and demultiplexer (M+D) 14. The M+D 14 is connected (illustratively) by M optical lines to an NxM matrix switch 13, which will be described below in more detail. The NxM matrix switch 13 has N RF links to a number (N) radio transceivers 15. The radio transceivers 15 are connected through a switch 17 to a number (K) channels of another network which may be ISDN, cellular, LAN, PBX etc. K may be greater than or equal to N. Also in the base centre 10, a central unit 16 is connected to the switch 17, NxM matrix switch, and M+D 14 to control optical, RF, and baseband routing and switching, and co-ordinate the allocation of RF carriers and channels in conjunction with mobile equipment.

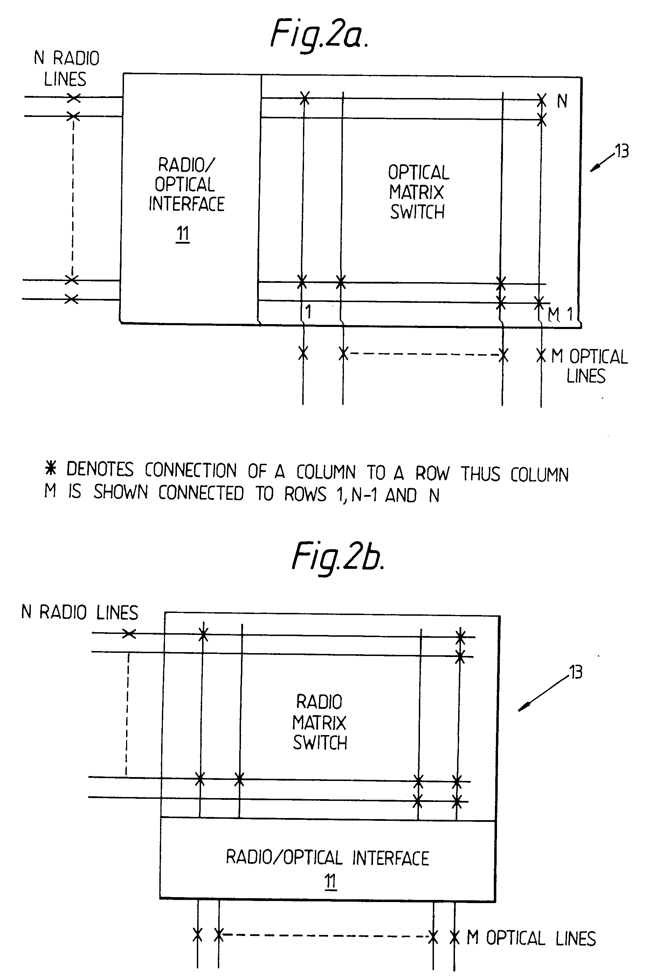

A central part of the base centre 10 is the NxM matrix switch 13. This multiplexes many of the N radio carriers onto any of the M optical transmission lines, i.e. none, one or more of the radio carriers may be on any one of the optical carriers at any one time. The NxM matrix switch 13 may be configured in one of two ways, as shown in Figures 2a and 2b. In each case, the radio/optical interface places the RF carriers to be transmitted from the central transceivers onto the optical carrier(s) and takes off, from the optical carrier(s), the RF carriers to be received by the central transceivers. The switching may be optical (Figure 2a), in which case the radio/optical interface is on the radio "side" of the switch, or the switch may be a radio (RF) matrix switch (Figure 2b), in which case the radio optical interface is on the optical system "side" of the switch. In either case, the overall result is that the N radio lines can be multiplexed onto the M optical lines.

The advantages of the system of the preferred embodiment are profound. A user can access the external network through any of the radio ports 1 with a suitable RF transceiver, e.g. a cordless telephone (CT), and be connected to a free one of the N transceivers 15. Provided the RF capacity was available, all N transceivers could be employed in calls to/from a particular one of the radio ports 1, or as would be more likely, the usage of the transceivers would be distributed among the radio ports of the system. Here lies a key advantage of the system: the centralisation of the radio transceivers. In the present system the radio transceivers are centralised, allowing more economic use and facilitating maintenance etc. Other significant advantages include the possibility of handover between ports covering different zones or areas, by simply switching between optical carriers, i.e. by switching within the NxM matrix switch 13. Also the use of diversity can easily be achieved centrally through switching or combining links to 2 or more ports, to improve performance of mobiles covered by those ports. Further, advantageous use of the RF system can be achieved because any of the carriers allocated to the service, rather than a given subset, can be dynamically assigned by the centralised base, to a given zone or cell. Thus an RF carrier may be allocated to both zone 1 and zone 4, but to different users. At another time, RF carrier may be assigned to just zone 3. The total number of users may remain more or less constant for the whole system, but user density within the system may vary. For example, all the users may shift from zone 1 down to zone 4, with all the central transceivers continually active. If transceivers were placed remotely in each of the zones, the same number of transceivers as that at a centrallocation would be required in each of the zones to meet the peak traffic demand during the day, even though they could remain idle for much of the time. Four times the number of transceivers of the centralised configuration would then be required for the system of Figure 1, hence the improved trunking performance of the centralised scheme, minimising the cost of providing transceivers, the quantity of equipment in the field and affording a potential reduction in maintenance and installation costs.

Handover requires a change of base transceiver as a mobile transits zones. This need no longer be necessary as the switch, block 3, simply switches the active transceiver for a given mobile from one zone to another as the mobile makes the transition. Thus handover break is reduced to a potentially very short optical or RF switch time compared to the much longer period required to switch between transceivers.

The spectrum efficiency of many radio distribution systems are increased if the RF transmissions within the system are synchronised. This is difficult if transceivers are spread over several locations, but more straightforward when they are centralised.

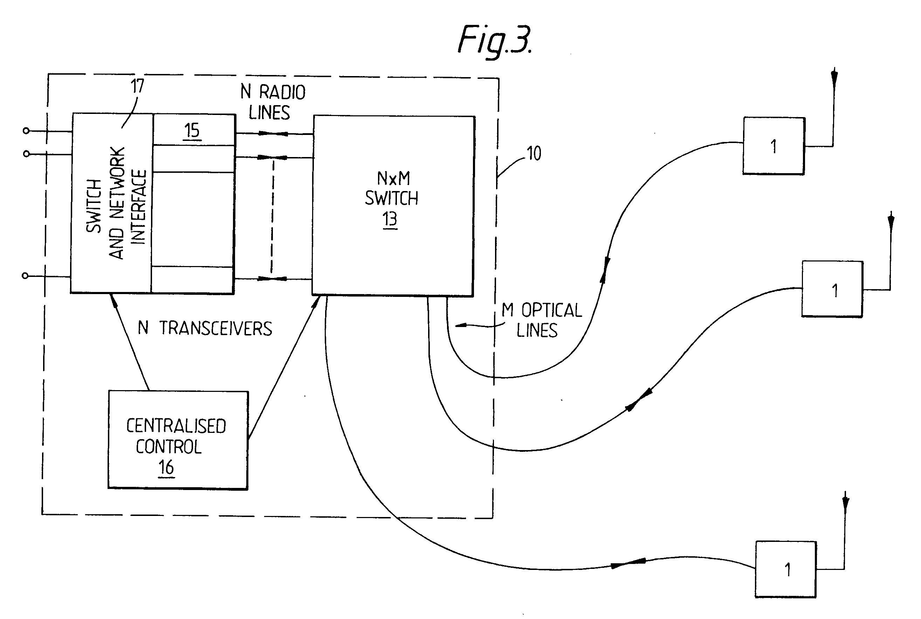

An alternative embodiment of the invention is shown in Figure 3 and is very similar to that of Figure 1, except that the optical system does not incorporate multiplexing/demultiplexing. Thus there are no M+Ds 4 and the M outputs of NxM switch 13 are connected directly to the radio ports 1. There is therefore a permanent 1 to 1 correspondence between the optical lines in the NxM switch 13 and the radio ports 1.

The embodiment of the invention described is based on the use of frequency division multiple access, where each communications link is on a separate radio frequency. As an alternative, time division multiple access could be used, where each communication link exists on separate time slots on a single radio channel. In this case there may still be multiple transceivers in the base centre 10 to cope with the traffic demand and hence provide frequency/timeslot reuse at the radio distribution ports 1. The connection from the transceivers 15 to the matrix switch 13 will then be by N radio links with P timeslots each, making NxP links in total to the matrix switch 13 from the transceivers 15. An extension of this approach is the possibility of a hybrid time and frequency division access system, with multiple radio carriers and several timeslots on each.

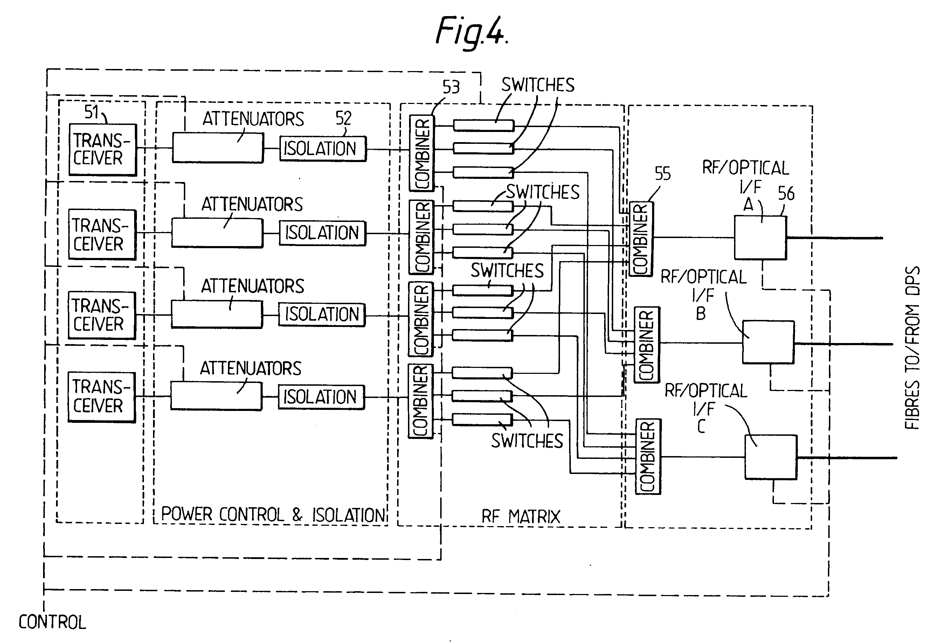

An example of a form of an RF switch is shown in Figure 4. The figure shows the RF matrix switch in a three distribution point system demonstrator. The RF matrix switch interconnects the four radio transceivers 51 (with their associated isolator circuits 52) to the three circuits each of which feeds a distribution point via a pair of fibres. Bi-directional RF connections for all the combinations of base unit and D.P. are made via switches that allow either through connection or isolation of the connection path. These switches are under computer control.

The signals from/to the radio transceiver 51 are split/combined in four 3 way combiners 53 (these are actually 4 way combiners with the spare output feeding to the scanning receiver 52) with each output/input passing through a switch that can isolate that output/input. From the switches the signals go to the inputs of one of the three 4 way combiners 55 and hence to/from the D.P.s via one of the three RF/optical interfaces 56.

These switches are under microprocessor control and allow the RF matrix to switch any transceiver to any combination of the distribution points and conversely a distribution point to any combination of the transceivers. Thus a base unit can feed all the distribution points simultaneously then by changing the switches feed only one distribution point.

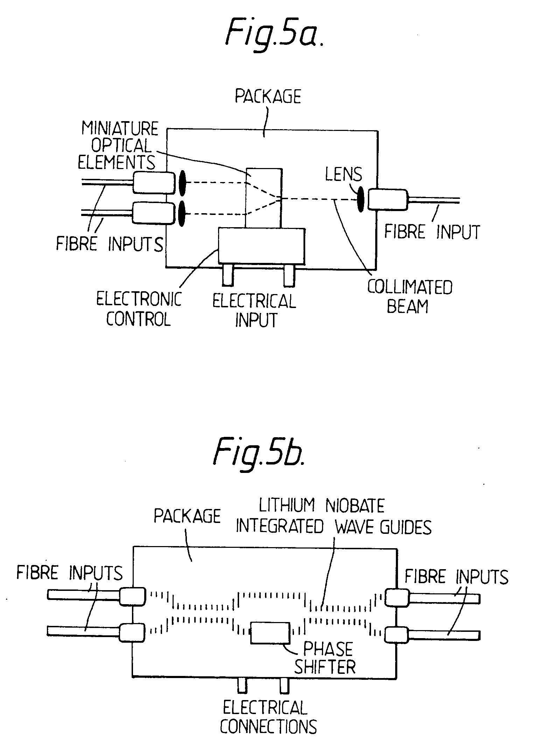

Two examples of the elements for optical switch and shown in Figure 5. There are two basic technologies; (i) Bulk Optic Devices and (ii) Guided Wave Devices.

A bulk optic switch element, shown in Figure 5(a), uses mechanical or physical reorientation of the optical path to achieve the switching of the incoming optical signals between output ports. An example of this type of switch is presented below for a single input switchable between two outputs. Other switch configurations using this as a basic building block facilitate 2x2 and 2x4 switches.

A guided wave device switch element, shown in Figure 5(b), uses the electro-optic effect to change the optical propagation characteristics of switch waveguides through the application of electric fields. An example of this device type is the Mach Zender Inteferometer (MZI) shown in Figure 5(b). This type of switch can be extended from a simple 2x2 to a non-blocking 8x8 switch matrix.

## Claims

1. A communications system comprising: a base centre (10) having one or more radio transceivers (15) for providing a number of radio frequency (RF) communications links; and a plurality of fixed radio ports (1) through which RF signals can be transmitted and received over the air; characterised in that there is a fibre optic network (2,4) for interconnecting the RF transceivers (15) and the fixed radio ports; and there are a plurality of radio/optical interfaces (11) by which RF signals can be modulated onto and demodulated from one or more optical signals, which interfaces (11) are between the RF transceivers (15) and the fibre optic network (2,4), and between the fibre optic network (2,4) and the fixed radio ports (1) whereby the RF signals may be carried on the fibre optic network by means of modulated optical signals.

2. A communications system according to claim 1, further comprising a matrix switch (13), for selectively interconnecting the transceivers (15) and the radio ports (1) through the fibre optic network (2,4).

3. A communications system as claimed in claim 1 or 2 wherein the RF links are frequency division multiplexed.

4. A communications system as claimed in claim 1 or 2 wherein the RF links are time division multiplexed.

5. A communications system as claimed in claim 2, 3 or 4, wherein there is a means for combining RF signals to or from one or more of the RF ports (1).

6. A communications system as claimed in claim 2, or any of claims 3 to 5 when dependent on claim 2, wherein the matrix switch (13) is for switching optical signals, and between the optical matrix switch (13) and the one or more RF transceivers (15) there are one or more RF/optical interfaces (11).

7. A communications system as claimed in claim 2, or any one of claims 3 to 5 when dependent on claim 2 wherein the matrix switch (13) is for switching RF signals, and between the RF matrix switch (13) and the fibre optic network (2,4) there are one or more RF/optical interfaces (11).

8. A communications system as claimed in any preceding claim wherein there is multiplexing/demultiplexing of the optical signals in the fibre optic network.

9. A communications system as claimed in any preceding claim wherein the fibre optic network (2,4) incorporates wavelength routing of optical signals.

10. A communication system as claimed in claim 2, or any of claims 3 to 9 when dependent on claim 2, which call handover is between radio ports is controlled in the base centre through switching the radio transceiver (15), from one radio port (1) to another radio port (1) by the matrix switch (13).

11. A communication system as claimed in claim 2, or any of claims 3 to 10 when dependent on claim 2, in which diversity operation is provided by combining or switching between two or more radio points in the matrix switching.

12. A communication system as claimed in any preceding claim which dynamic channel allocation is controlled in the base centre (10).

## Patentansprüche

1. Kommunikationssystem, das aufweist: eine Basiszentrale mit einem oder mehreren Funktransceivern (15) zur Bereitstellung einer Anzahl von über Funkfrequenz (RF) betriebenen Kommunikationsstrecken; und eine Vielzahl von feststehenden Funkports (1), durch die RF-Signale durch die Luft übertragen und empfangen werden können
**dadurch gekennzeichnet,**
daß ein Lichtleitfasernetz (2, 4) zum Zusammenschalten der RF-Transceiver (15) und der feststehenden Funkports vorhanden ist; und daß eine Vielzahl von Funk-/optischen Schnittstellen vorhanden ist, durch die RF-Signale auf ein oder mehrere optische Signale aufmoduliert, oder von einem oder mehreren optischen Signalen demoduliert werden können, wobei sich die Schnittstellen zwischen den RF-Transceivern und dem Lichtleitfasernetz und zwischen dem Lichtleitfasernetz und den feststehenden Radioports befinden, wodurch die RF-Signale auf dem Lichtleitfasernetz durch modulierte optische Signale transportiert werden können.

2. Kommunikationssystem nach Anspruch 1, das weiter einen Matrixschalter (13) zum selektiven Durchschalten der Transceiver (15) und der Funkports (1) durch das Lichtleitfasernetz (2, 4) aufweist.

3. Kommunikationssystem nach Anspruch 1 oder 2, bei dem die RF-Strecken im Frequenzmultiplex betrieben werden.

4. Kommunikationssystem nach Anspruch 1 oder 2, bei dem die RF-Strecken im Zeitmultiplex betrieben werden.

5. Kommunikationssystem nach Anspruch 2, 3 oder 4, bei dem es eine Einrichtung zum Verknüpfen von RF-Signalen, die an einen oder mehrere RF-Ports (1) gerichtet oder von diesen geliefert werden.

6. Kommunikationssystem nach Anspruch 2 oder nach einem beliebigen Anspruch 3 bis 4, sofern dieser von Anspruch 2 abhängt, bei dem der Matrixschalter (13) zum Schalten optischer Signale dient, und bei dem zwischen dem optischen Matrixschalter (13) und einem oder mehreren RF-Transceivern (15) eine oder mehrere RF-/optische Schnittstellen (11) vorhanden sind.

7. Kommunikationssystem nach Anspruch 2, oder nach einem beliebigen Anspruch 3 bis 5, sofern dieser von Anspruch 2 abhängt, bei dem der Matrixschalter (13) zum Schalten von RF-Signalen dient, und bei dem zwischen dem RF-Matrixschalter (13) und dem Lichtleitfasernetz (2, 4) eine oder mehrere RF-/optische Schnittstellen (11) vorhanden sind.

8. Kommunikationssystem nach einem beliebigen vorhergehenden Anspruch, bei dem ein Multiplexieren/Demultiplexieren der optischen Signale im Lichtleitfasernetz stattfindet.

9. Kommunikationssystem nach einem beliebigen vorhergehenden Anspruch, bei dem das Lichtleitfasernetz (2, 4) eine Wellenlängenleitweglenkung der optischen Signale umfaßt.

10. Kommunikationssystem nach Anspruch 2, oder nach einem beliebigen Anspruch 3 bis 9, sofern dieser von Anspruch 2 abhängt, bei dem die Rufübergabe zwischen Funkports im Basiszentrum durch Umschalten des Funktransceivers (15) von einem Funkport (1) zum anderen Funkport (1) durch den Matrixschalter (13) gesteuert wird.

11. Kommunikationssystem nach Anspruch 2, oder nach einem beliebigen Anspruch 3 bis 10, sofern dieser von Anspruch 2 abhängt, bei dem ein Diversitybetrieb durch Verknüpfen oder Umschalten zwischen zwei oder mehreren Funkpunkten im Matrixschalter herbeigeführt wird.

12. Kommunikationssystem nach einem beliebigen vorherigen Anspruch. bei dem die dynamische Kanalzuteilung in der Basiszentrale (10) gesteuert wird.

## Revendications

1. Un système de communication comprenant: un centre de base (10) équipé d'un ou d'une pluralité d'émetteurs-récepteurs radio (15) pour établir une pluralité de liaisons de communication à fréquence radioélectrique (RF); et une pluralité de ports radio fixes (1) au travers desquels les signaux RF peuvent être transmis et reçus par air; caractérisé en ce qu'il est prévu un réseau à fibres optiques (2, 4) pour interconnecter les émetteurs-récepteurs RF (15) et les ports radio fixes; et une pluralité d'interfaces radio/optiques (11) grâce auxquelles les signaux RF peuvent être modulés en et démodulés à partir d'un ou d'une pluralité de signaux optiques, lesdites interfaces (11) étant entre les émetteurs-récepteurs RF (15) et le réseau de fibres optiques (2, 4) et entre le réseau de fibres optiques (2, 4) et les ports radio fixes (1), de manière que les signaux RF puissent être acheminés sur le réseau de fibres optiques au moyen de signaux optiques modulés.

2. Un système de communication selon la revendication 1, comprenant en outre un commutateur à matrice (13) pour interconnecter sélectivement les émetteurs-récepteurs (15) et les ports radio (1) par l'intermédiaire du réseau de fibres optiques (2,4).

3. Un système de communication selon la revendication 1 ou 2, dans lequel les liaisons RF sont à multiplexage à répartition en fréquence

4. Un système de communication selon la revendication 1 ou 2, dans lequel les liaisons RF sont à multiplexage à répartition dans le temps.

5. Un système de communication selon la revendication 2, 3 ou 4, dans lequel il est prévu des moyens pour combiner les signaxu RF allant vers ou venant d'un ou d'une pluralité de ports RF (1).

6. Un système de communication selon la revendication 2, ou l'une quelconque des revendications 3 à 5 lorsqu'elle est dépendante de la revendication 2, dans lequel le commutateur à matrice (13) est prévu pour commuter les signaux optiques, et qu'il est prévu, entre le commutateur à matrice optique (13) et un ou plusieurs émetteurs-récepteurs RF (15), une ou plusieurs interfaces RF/optiques (11).

7. Un système de communication selon la revendication 2, ou l'une quelconque des revendications 3 à 5 lorsqu'elle est détpendante de la revendication 2, dans lequel le commutateur à matrice (13) est prévu pour commuter les signaux RF et qu'il est prévu, entre le commutateur à matrice RF (13) et le réseau de fibres optiques (2, 4), une ou plusieurs interfaces RF/optiques (11).

8. Un système de communication selon l'une quelconque des précédentes revendications, dans lequel il se produit un multiplexage/démultiplexage des signaux optiques dans le réseau de fibres optiques.

9. Un système de communication selon l'une quelconque des précédentes revendications, dans lequel le réseau de fibres optiques (2, 4) comprend l'acheminement sur la longueur d'onde des Signaux optiques.

10. Un système de communication selon la revendication 2, ou l'une quelconque des revendications 3 à 9 lorsqu'elle est dépendante de la revendication 2, dans lequel le transfert des appels entre les ports radio est commandé dans le centre de base par commutation de l'émetteur-récepteur radio (15) d'un port radio (1) à un autre port radio (1) par le commutateur à matrice (13).

11. Un système de communication selon la revendication 2, ou l'une quelconque des revendications 3 à 10 lorsqu'elle est dépendante de la revendication 2, dans lequel la diversité du fonctionnement est assurée par combinaison ou commutation entre deux points radio ou plus dans la commutation matricielle.

12. Un système de communication selon l'une quelconque des précédentes revendications, dans lequel l'affectation des canaux dynamiques est commandée dans le centre de base (10).
